# EUROPEAN PATENT SPECIFICATION

(11) **EP 1 270 665 B1**
(45) Date of publication and mention of the grant of the patent: **08.02.2006**
(21) Application number: 00971731.5
(22) Date of filing: 02.11.2000
(51) Int. Cl.: C08L 25/00, C08L 51/04, C08L 71/12, C08L 85/02, C08L 91/06, C08K 5/523, G03G 15/08, C08L 25/04

(54) **STYRENE RESIN COMPOSITION**
STYROLHARZZUSAMMENSETZUNG
COMPOSITION DE RESINE STYRENIQUE

(43) Date of publication of application: 02.01.2003
(73) Proprietor: DAICEL CHEMICAL INDUSTRIES, LTD., Sakai-shi, Osaka 590-8501 (JP)
(72) Inventor: SEI, Toshiya, Daito-shi Osaka 574-0043 (JP); MIYAZATO, Ryoji, Hannan-shi Osaka 599-0201 (JP)
(74) Representative: Grünecker, Kinkeldey, Stockmair & Schwanhäusser Anwaltssozietät
(86) International application number: PCT/JP2000/007708
(87) International publication number: WO 2002/036681

(56) References cited:
- EP-A- 0 767 215
- EP-A2- 0 624 621
- EP-A2- 0 979 843
- WO-A-98/29248
- JP-A- 10 036 604
- KENZO FUSEKAWA ED.: 'Saiwai shobou', 10 September 1983 XP002937039 Wax no seishitsu to ouyou, the 1st edition, the 1st printing * page 126 *

## Description

The present invention relates to a resin composition which comprises a styrenic resin and a polyphenylene ether-series resin as a main resin component, and is excellent in releasability and formability (or moldability).

### BACKGROUND ART

A styrenic resin is excellent in impact resistance, rigidity and insulation resistance in addition to formability and dimensional stability. Therefore, the styrenic resin has been used in various fields such as parts of electrical household appliances and parts of office automation (OA) equipment. However, since the styrenic resin does not have enough mechanical properties, resistance to chemicals, heat resistance and the like, the styrenic resin has been used in combination with a polyphenylene ether-series resin to improve above problems. Moreover, in order to further give flame-retardancy to the mixed resin, various flame-retardants have been added to the resin.

For example, Japanese Patent Application Laid-Open No. 118957/1980 (JP-55-118957A) discloses a flame-resistant composition in which a halogen-containing aromatic phosphorus compound is blended with a mixture of a polyphenylene ether-series resin and a styrenic resin. Since the composition does not have enough releasability from a mold and formability, the composition is inefficient in formability.

Moreover, Japanese Patent Application Laid-Open No. 149263/1992 (JP-4-149263A) discloses a flame-retardant resin composition comprising a certain rubber-modified aromatic resin, a polyphenylene ether-series resin, a red phosphorus, and optionally mineral oil, and Japanese Patent Application Laid-Open No. 328572/1997 (JP-9-328572A) discloses a flame-retardant resin composition comprising a polyphenylene ether-series resin having a certain molecular weight, a thermoplastic resin, an organophosphorus compound, and optionally a higher fatty acid amide compound. However, these compositions are also deficient in releasability and formability as well as flame retardancy, in addition, a mold to be used has heavy stains.

Thus, it is difficult to obtain a composition having excellent releasability and formability in a resin system (or composition) in which both the styrenic resin and the polyphenylene-series resin are mixed together. Furthermore, it is also difficult to obtain a composition further satisfying high flame-retardancy all at once.

Therefore, an object of the present invention is to provide a resin composition excellent in releasability and formability despite of comprising a styrenic resin and a polyphenylene ether-series resin as main components, and a toner cartridge container formed (or mold) with the same.

It is another object of the invention to provide a resin composition comprising a styrenic resin and a polyphenylene ether-series resin as main components and having excellent flame-retardancy, and a toner cartridge container formed (or mold) with the same.

It is still another object of the invention to provide a resin composition comprising a styrenic resin and a polyphenylene ether-series resin as main components and being capable of reducing ignition caused by an electric discharge, and a toner cartridge container formed (or mold) with the same.

### DISCLOSURE OF INVENTION

The inventors of the present invention made intensive studies to achieve the above objects and finally found that a resin composition excellent in releasability and formability can be obtained by blending or mixing a certain wax with a resin composition composed of a styrenic resin and a polyphenylene ether-series resin as main components. The present invention was accomplished based on the above findings.

That is, the styrenic resin composition of the present invention comprises a styrenic resin (A), a polyphenylene ether-series resin (B), a polyolefinic wax (C) and a flame retardant (D). The styrenic resin (A) may comprise at least a rubber-modified (or rubber-containing, rubber-reinforced or rubber-incorporated) styrenic resin. The polyolefinic wax (C) greatly participates in improvement of formability and releasability, and normally the melt viscosity at 140°C of the polyolefinic wax (C) is 200 to 600 cps (mPa.s), the density thereof is 0.86 to 0.98 g/ml, and the melting point thereof is 100 to 160°C. The polyolefinic wax (C), comprises a polyethylene wax , particularly a polyethylene wax having a melt viscosity at 140°C of 300 to 550 cps, a density of 0.86 to 0.96 g/ml and a melting point of 100 to 130°C, is preferred. The flame retardant (D) normally comprises a phosphorus-series (or phosphorus-containing) flame retardant, in particular an oligomeric aromatic phosphoric ester and the like. The ratio of the component (A) relative to the component (B) is normally 70/30 to 95/5, preferably 75/25 to 95/5, and more preferably 80/20 to 95/5 (weight ratio). The amount of the component (C) is, relative to 100 parts by weight of the total amount of the component (A) and the component (B), 0.1 to 2 parts by weight, and more preferably about 0.1 to 1 part by weight. The amount of the component (D) is, relative to 100 parts by weight of the total amount of the component (A) and the component (B), 3 to 30 parts by weight.

The present invention also includes a shaped article (molded article) formed (or molded) with the styrenic resin composition. Further, the present invention also includes a toner cartridge container formed (or molded) with the styrenic resin composition.

### BEST MODE FOR CARRYING OUT THE INVENTION

According to the present invention, a resin composition comprising a styrenic resin, a polyphenylene ether-series resin and a polyolefinic wax can improve releasability and formability. Further, by blending a flame retardant, the resin composition becomes one also excellent in flame retardancy.

### [Styrenic resin (A)]

The styrenic (or styrene-series) resin includes a polystyrenic resin and a rubber-modified (or rubber-containing, rubber-reinforced or rubber-incorporated) styrenic resin. The styrenic resin can be used singly or in combination. Preferably, the styrenic resin comprises at least the rubber-modified styrenic resin.

Examples of an aromatic vinyl monomer constituting the polystyrenic (or polystyrene-series) resin are styrene, an alkyl-substituted styrene (e.g., a vinyltoluene such as o-methylstyrene, m-methylstyrene and p-methylstyrene, a vinylxylene such as 2,4-dimethylstyrene, a mono- to di-C₁₋₄alkylstyrene such as p-ethylstyrene, p-isopropylstyrene, butylstyrene, p-t-butylstyrene, etc.), a halogen-substituted styrene (e.g., o-chlorostyrene, p-chlorostyrene, o-bromostyrene, etc.), an α-alkyl-substituted styrene in which an alkyl group is substituted at the α position (e.g., an α-C₁₋₄alkylstyrene such as α-methylstyrene, α-ethylstyrene, etc.) and the like. The above aromatic vinyl monomer may be used alone or in combination. Among the above monomers, usually, styrene, vinyltoluene, α-methylstyrene and the like, in particular styrene is used.

The polystyrenic resin may be a copolymer of the aromatic vinyl monomer and a copolymerizable monomer. Examples of the copolymerizable monomer are a vinyl cyanide-series monomer (e.g., acrylonitrile, methacrylonitrile etc.), an unsaturated polycarboxylic acid or its acid anhydride (e.g., maleic acid, itaconic acid, citraconic acid, maleic anhydride, itaconic anhydride, citraconic anhydride, etc.), an imide-series monomer [e.g., an N-alkylmaleimide (e.g., an N-C₁₋₄alkylmaleimide such as N-methylmaleimide, N-ethylmaleimide, etc.), a N-cycloalkylmaleimide (e.g., an N-cycloC₃₋₈alkylmaleimide such as N-cyclohexylmaleimide, etc.), an N-arylmaleimide (e.g., N-phenylmaleimide, an N-C₁₋₄alkylphenylmaleimide such as N-(2-methylphenyl)maleimide etc.)], an acrylic monomer [e.g., (meth)acrylic acid, a C₁₋₂₀alkyl ester of (meth)acrylic acid such as, methyl(meth)acrylate, ethyl (meth)acrylate, propyl (meth)acrylate, butyl (meth)acrylate, amyl (meth)acrylate, hexyl (meth)acrylate, octyl (meth)acrylate, 2-ethylhexyl (meth)acrylate, dodecyl (meth)acrylate, octadecyl (meth)acrylate, etc.; a cycloC₃₋₈alkyl ester of (meth)acrylic acid such as cyclohexyl (meth)acrylate; an aryl ester of (meth)acrylic acid such as phenyl (meth)acrylate; an aralkyl ester of (meth) acrylic acid such as benzyl (moth) acrylate; glycidyl (meth)acrylate; a hydroxyC₂₋₄alkyl ester of (meth) acrylic acid such as 2-hydroxyethyl (meth)acrylate, 2-hydroxyporpyl (meth)acrylate, etc.] and so on. The above copolymerizable monomer may be used alone or in combination. The amount of the copolymerizable monomer to be used with respect to an amount of total monomers can be selected from a range of 1 to 50 % by weight, preferably in a range of 5 to 40 % by weight, and more preferably in a range of 8 to 30 % by weight.

Among the polystyrenic resins, a polystyrene (GPPS); a poly(α-methylstyrene); a styrene-acrylonitrile copolymer (AS resin); a styrene-maleic anhydride copolymer (SMA resin); a styrene-methyl methacrylate copolymer (MS resin); and the like are preferred. In particular, the GPPS is preferred.

The rubber-modified polystyrenic resin is a polymer in which a rubber like polymer (or a rubber or elastomeric polymer) is dispersed in the form of a particle in a matrix composed of the polystyrenic resin, and the rubber like polymer or elastomeric polymer can be comprised in the polystyrenic resin by blending or copolymerization (e.g., graft polymerization, block polymerization, etc.) and the like. The preferred rubber-modified polystyrenic resin is usually a graft copolymer obtainable by polymerizing a monomer composed of at least an aromatic vinyl monomer or a monomer mixture thereof by a conventional method (such as bulk polymerization, bulk suspension polymerization, solution polymerization, emulsion polymerization) in the presence of the rubber like polymer.

Examples of the rubber like polymer (rubber or elastomeric polymer) are a diene-series rubber [e.g., a butadiene-series polymer such as a polybutadiene (lower cis-type (or lower cis-mode) or higher cis-type (or higher cis-mode) polybutadiene), a styrene-butadiene copolymer, a butadiene-acrylonitrile copolymer, a styrene-isobutylene-butadiene-series copolymerized rubber, a butadiene-(meth)acrylic acid ester copolymer and the like, an isoprene-series polymer such as a polyisoprene, a styrene-isoprene copolymer, an isobutylene-isoprene copolymer and the like], an ethylene-vinylacetate copolymer, an acrylic rubber (e.g., a polybutyl acrylate), an ethylene-α-olefin-series copolymer [an ethylene-propylene rubber (EPR), etc.], an ethylene-α-olefin-polyene copolymer [e.g., an ethylene-propylene-diene rubber (EPDM), etc.], an urethane rubber, a silicone rubber, a butyl rubber, a hydrogenated diene-series rubber (e.g., a hydrogenated styrene-butadiene copolymer, a hydrogenated butadiene-series polymer, etc.), an ethylene-series ionomer, and others. Incidentally, the copolymers may be random or block copolymers. The block copolymers include copolymers having the structure of an AB mode (or type), an ABA mode, a taper mode, a radial teleblock mode and the like. Moreover, in addition to the above-mentioned hydride of the block copolymer, the hydrogenated butadiene-series polymer includes: a hydride of a block polymer of a styrene block and a styrene-butadiene random copolymer; a hydride of a polymer comprising a polybutadiene block in which an amount of 1,2-vinyl bond in polybutadiene is not more than 20 % by weight and a polybutadiene block in which an amount of 1, 2-vinyl bond in polybutadiene is more than 20 % by weight; and others. The rubber like polymer may be used alone or in combination.

The preferred rubber like polymer is conjugated 1,3-diene or a polymer of its derivative and, particularly, a diene-series rubber [e.g., a polybutadiene (butadiene rubber), an isoprene rubber, a styrene-butadiene copolymer, etc.].

In the rubber-modified polystyrenic resin, a content of the rubber like polymer is, for example, 3 to 80 % by weight, preferably 4 to 70 % by weight, and particularly preferably 5 to 55 % by weight (e.g., 6 to 60 % by weight).

The morphology (or configuration) of the rubber-like polymer (or rubber), dispersed in the matrix comprising the polystyrenic resin, is not particularly limited, and may comprise a core/shell structure, an onion structure, a salami structure or the like. The particle size of the rubber like polymer constituting a dispersed phase can be selected from the range of the volumetric mean particle diameter in accordance with an application of the resin composition, and for example, can be selected from the range of 0.05 to 30 µm, preferably 0.1 to 10 µm, and more preferably 0.2 to 7 µm (particularly about 0.5 to 5 µm). Moreover, in the rubber-modified styrenic resin, a graft ratio relative to the rubber component is normally 5 to 150 %, and preferably 10 to 150 %.

Among the rubber-modified styrenic resins, the preferred rubber-modified styrenic resin includes an high impact polystyrene (HIPS) in which a styrenic monomer is grafted to a rubber component, a styrene-butadiene copolymer, a styrene-acrylonitrile-butadiene copolymer (ABS resin), an α-methylstyrene-modified ABS resin, an imide-modified ABS resin in which an imide-series monomer is used as copolymerizable monomer, a methyl methacrylate-modified ABS resin in which methyl methacrylate is used as copolymerizable component, and others. In particular, the HIPS is preferred.

A weight average molecular weight of the styrenic resin (in regard to the graft copolymer, the styrenic resin constituting a matrix) is normally 10,000 to 1,000,000, preferably 50,000 to 500,000, and more preferably 100,000 to 500,000.

The styrenic resin may comprise the rubber-modified styrenic resin and the polystyrenic resin. In such a case, the ratio of the former relative to latter is normally 99/1 to 50/50 (weight ratio), preferably 95/5 to 60/40 (weight ratio), and more preferably 90/10 to 70/30 (weight ratio). The weight average molecular weight of the polystyrenic resin to be used in combination with the rubber-modified styrenic resin may be smaller than that of the styrenic resin constituting the matrix of the rubber-modified styrenic resin, for example, may be 10,000 to 500,000 and preferably 30,000 to 300,000.

### [Polyphenylene ether-series resin (B)]

The polyphenylene ether-series resin (B) includes a homopolymer or copolymer having a repeating unit represented by the following formula(s) (I) and/or (II). The polyphenylene ether-series resin can be used singly or in combination. 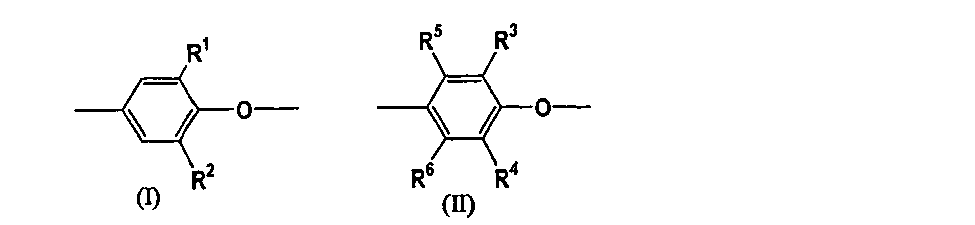
[wherein R¹, R², R³, R⁴, R⁵ and R⁶ independently represent a C₁₋₄alkyl group (e.g., a methyl, a ethyl, a propyl, a butyl and a t-butyl group) which may have a substituent (e.g., a hydroxyl group), an aryl group (e.g., a phenyl group) which may have a substituent (e.g., a hydroxyl group), or a hydrogen atom, provided that R⁵ and R⁶ are not hydrogen atoms concurrently]

Exemplified as the polyphenylene ether-series resin is a homopolymer, for example, a poly(2,6-diC₁₋₄alkyl-1,4-phenylene)ether such as a poly(2,6-dimethyl-1,4-phenylene)ether, a poly(2-methyl-6-ethyl-1,4-phenyene)ether, a poly(2,6-diethyl-1,4-phenylene)ether, a poly(2-methyl-6-n-propyl-1,4-phenylene)ether, a poly(2-ethyl-6-n-propyl-1,4-phenylene)ether, a poly(2,6-di-n-propyl-1,4-phenylene)ether, a poly(2-methyl-6-n-butyl-1,4-phenylene)ether, a poly(2-ethyl-6-isopropyl-1,4-phenylene)ether and others, a poly (2,6-dialkyl-1,4- phenylene)ether such as a poly(2-methyl-6-hydroxyethyl-1,4-phenylene)ether, and others. Among these resins, a poly(2,6-dimethyl-1,4-phenylene)ether is particularly preferred.

The polyphenylene ether-series copolymer includes a copolymer comprising a phenylene ether structure as a main monomer unit. Exemplified as the polyphenylene ether-series copolymer is a copolymer of a monomer constituting the homopolymer (in particular, 2,6-dimethylphenol, etc.) and other phenols, for example, a copolymer of a 2,6-dialkylphenol (in particular, 2,6-dimethylphenol) and a phenol (in particular, at least one member selected from mono- to tetra-C₁₋₄alkylphenols such as 2,3,6-trimethylphenol and o-cresol).

A weight average molecular weight of the polyphenylene ether-series resin is normally 25,000 to 60,000, preferably 30,000 to 55,000, and more preferably 40,000 to 50,000.

The ratio of the styrenic resin (A) relative to the polyphenylene ether-series resin (B) (weight ratio) is normally 70/30 to 95/5, preferably 75/25 to 95/5, and more preferably 80/20 to 95/5 (in particular, 85/15 to 95/5).

### [Polyolefinic wax (C)]

A combination of a resin system (or composition) comprising a styrenic resin and a polyphenylene ether-series resin with a polyolefinic wax ensures improvement of releasability from a mold (or a molding tool) and formability greatly. Such an improvement can not be shown in a combination of the resin system with a conventional releasing agent such as an ester of a fatty acid (or fatty acid ester).

The polyolefinic wax includes a polyethylene wax, a polypropylene wax, an olefin copolymer wax (e.g., ethylene copolymer wax), and a partially oxidized form thereof or a mixture thereof. Exemplified as the olefin copolymer is a copolymer of an olefin (e.g., an α-C₂₋₆olefin such as ethylene, propylene, butene-1, hexene-1, decene-1, 4-methylbutene-1, 4-methylpentene-1, and the like); a copolymer of the olefin, and a copolymerizable monomer, for example, a polymerizable monomer such as an unsatisfied carboxylic acid or a acid anhydride thereof [e.g., maleic anhydride, (meth)acrylic acid], an ester of (meth)acrylic acid [e.g., a C₁₋₆alkylester of (meth)acrylic acid such as methyl (meth)acrylate, ethyl (meth)acrylate], etc.; and others. Moreover, the copolymer includes a random copolymer, a block copolymer, or a graft copolymer. The olefin copolymer wax is usually a copolymer of ethylene and at least one monomer selected from other olefins and polymerizable monomers. Among the polyolefinic wax, a polyethylene wax is preferred. Incidentally, the polyolefinic wax may be linear- or blanched-structure.

The density of the polyolefinic wax is normally 0.86 to 0.98 g/ml. The melting point of the polyolefinic wax is normally 100 to 160°C. In particular, the density of the polyethylene wax is 0.86 to 0.96 g/ml, preferably 0.90 to 0.95 g/ml and more preferably 0.92 to 0.96 g/ml. The melt viscosity of the polyethylene wax at 140°C is normally 200 to 600 cps (mPa·s), preferably 300 to 550 cps and more preferably 400 to 500 cps. The melting point of the polyethylene wax is normally 100 to 130°C, preferably about 105 to 125°C and more preferably about 110 to 120°C. The weight average molecular weight of polyethylene wax is normally 1,000 to 12,000.

The polyolefinic wax can be produced by a conventional manner. For instance, the polyolefinic wax can be obtained by polymerizing ethylene, or ethylene and a copolymerizable monomer in the presence of an initiator.

The amount of the polyolefinic wax (C) relative to 100 parts by weight of the total amount of the component (A) and the component (B) is 0.1 to 2 parts by weight (e.g., 0.2 to 1.5 parts by weight), and preferably 0.1 to 1 part by weight (e.g., 0.3 to 1 part by weight).

### [Flame retardant (D)]

The resin composition of the present invention comprises a flame retardant. The flame retardant includes a phosphorus-series (phosphorus-containing) flame retardant, a halogen-series (halogen-containing) flame retardant, an inorganic-series flame retardant, and others. The flame retardant can be used singly or in combination.

The phosphorus-series flame retardant is not particularly limited as far as the retardant is a compound comprising a phosphorus atom, and includes an organophosphorus compound (a phosphoric ester (phosphate), a phosphite, a phosphine, a phosphine oxide, a biphosphine, a phosphonium salt, a phosphinic acid or a salt thereof, etc.), an inorganic-series phosphate, and the like.

Among the organophosphorus compounds, exemplified as the phosphoric ester is, for example, a phosphoric ester such as an aliphatic phosphate [e.g., a triC₁₋₁₈alkyl phosphate such as trimethyl phosphate, triethyl phosphate, tributyl phosphate, tri(2-ethylhexyl) phosphate, tributoxyethyl phosphate and trioleyl phosphate; a diC₂₋₁₀alkyl phosphate such as dibutyl phosphate and di(2-ethylhexyl)phosphate; a monoC₂₋₁₀alkyl phosphate such as monobutyl phosphate and monoisodecyl phosphate; 2-acryloyloxyethylacid phosphate; 2-methacryloyloxyethylacid phosphate; dicyclopentylhypodiphosphate; and the like], an aromatic phosphate [e.g., a triC₆₋₁₂aryl phosphate such as triphenyl phosphate, tricresyl phosphate, trixylenyl phosphate, tris(isopropylphenyl) phosphate, tris(o-phenylphenyl) phosphate, tris(p-phenylphenyl) phosphate, trinaphthyl phosphate, cresyldiphenyl phosphate, xylenyldiphenyl phosphate, di(isopropylphenyl)phenyl phosphate, o-phenylphenyldicresyl phosphate, etc.; dipyrocatechol hypodiphosphate; and the like], and an aliphatic-aromatic phosphate [e.g., a diC₆₋₁₂arylmonoC₂₋₁₀alkyl phosphate such as diphenyl(2-ethylhexyl)phosphate; a diC₆₋₁₂arylmono(meth)acryloxyC₂₋₁₀alkyl phosphate such as diphenyl-2-acryloyloxyethyl phosphate, diphenyl-2-methacryloyloxyethyl phosphate; a monoC₆₋₁₂arylmonoC₂₋₁₀alkyl phosphate such as phenylneopentyl phosphate, ethylpyrocatechol phosphate; pentaerythritoldiphenyl diphosphate; and the like], and a condensate thereof.

Among the organophosphorus compounds, the phosphite includes a compound corresponding to the above-mentioned phosphoric esters (phosphates), for example, a phosphite such as an aliphatic phosphite [e.g., a triC₁₋₁₈alkyl phosphite, a diC₄₋₁₀alkyl phosphite, a monoC₄₋₁₀alkyl phosphite]: an aromatic phosphite [e.g., a triC₆₋₁₂aryl phosphite]; an aliphatic-aromatic phosphite [e.g., a diC₆₋₁₂arylmonoC₂₋₁₀alkyl phosphite]; and an alicyclic phosphite [e.g., a hydrogenated bisphenol A pentaerythritol phosphite polymer], and a condensate thereof.

The organophosphorus compound also includes a phosphonate (a mono- to triC₁₋₄alkyl phosphonate such as methylneopentyl phosphonate); a phosphine oxide (a mono- to triC₆₋₁₂arylphosphine oxide such as triphenylphosphine oxide, tricresylphosphine oxide); a phosphonic ester (e.g., a diC₆₋₁₂aryl ester of a C₁₋₄alkanephosphonic acid such as diphenyl methanephosphonate, a diC₁₋₄alkyl ester of a C₆₋₁₂arylphosphonic acid such as diethyl phenylphosphonate); and others.

The organophosphorus compound can be used singly or in combination.

Exemplified as the inorganic-series phosphate as the phosphorus-series flame retardant is, for example, an ammonium polyphosphate, a red phosphorus, etc. The red phosphorus may be one of which the surface is pretreated. Exemplified as a method for a surface treatment of the red phosphorus is a coating treatment by applying a coat of a metal hydroxide (a magnesium hydroxide, a zinc hydroxide, an aluminum hydroxide, a titanium hydroxide, etc.), a coating treatment by applying a coat of the metal hydroxide and a thermosetting resin, a coating treatment by applying a multi-layered coat which comprises a coat of the metal hydroxide and a coat of a thermosetting resin.

The halogen-series (halogen-containing) flame retardant, for example, includes an organic compound containing a bromine atom and/or a chlorine atom (particularly, a bromine atom) [e.g., a halogenated bisphenol (e.g., tetrabromobisphenol A, etc.), a halogenated epoxy resin (e.g., a tetrabromobisphenol A type (or mode) epoxy oligomer, a brominated bisphenol type (or mode) phenoxy resin, etc.), an aromatic halide (or aromatic halogenide) (such as decabromodiphenyl oxide), a halogenated polycarbonate (such as a brominated bisphenol-series polycarbonate), a halogenated aromatic vinyl-series polymer (such as a brominated polystyrene, a brominated crosslinked polystyrene), a halogenated polyphenylene ether (such as a brominated polyphenylene oxide, a polydibromophenylene oxide, a decabromophenyl oxide bisphenol condensate), a halogenated cyanurate resin, a halogen-containing phosphoric ester, and others].

The inorganic-series flame retardant includes various metal compounds, for example, a metal hydroxide such as a calcium hydroxide, a barium hydroxide, a zirconium hydroxide, a magnesium hydroxide, an aluminum hydroxide, a dolomite and a hydrotalcite; a metal oxide such as an antimony trioxide, a tin oxide and a zirconium oxide; a metal salt of carbonic acid (metal carbonate) such as a magnesium carbonate which may be basic, a zinc carbonate which may be basic, a calcium carbonate which may be basic and a barium carbonate which may be basic; a metal salt of boric acid (metal borate) such as a zinc borate, a zinc metaborate and a barium metaborate; and others. The inorganic-series flame retardant can be used singly or in combination.

Among these flame-retardants, the phosphorus-series flame retardant is preferred. Out of the phosphorus-series flame retardant, the phosphoric ester, especially an oligomeric aromatic phosphoric ester, is preferred. For example, the oligomeric aromatic phosphoric ester includes a compound represented by the following formula (III): 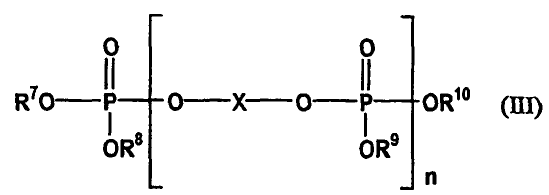
wherein R⁷, R⁸, R⁹ and R¹⁰ independently represent an aryl group which may have a substituent, X represents a di- or more valent aromatic group, and n is an integer of 0 or more.

In the above formula, the aryl group includes, for example, a phenyl group and a naphthyl group, and is preferably a phenyl group. Moreover, the substituent of the aryl group includes, for example, an alkyl group, a hydroxyl group, an alkoxy group, an alkylthio group, etc., and preferably a C₁₋₄alkyl group (in particular, a methyl group). Incidentally, the aryl group may have a plurality of (e.g., two) the alkyl groups as the substituent (s) For example, the aryl group may have alkyl group(s) as substituent(s) at suitable position(s) thereof (e.g., 2-position, 3-position, 4-position, 2,6-positions, 2,4-positions, 3,5-positions, 3,6-positions or 2,4,6-positions of phenyl group, etc.).

Moreover, the di- or more valent aromatic group refers to a di- or more valent group in which two or more of hydrogen atoms bonded to a carbon atom in an aromatic compound are removed from the aromatic compound. For instance, it includes a phenylene group which may have a substituent, a derivative from a polynuclear phenol (such as a bisphenol). The relative position of two or more free valences can be selected optionally. Exemplified as a particularly preferred compound corresponding to an organic group X is hydroquinone, resorcinol, bis(4-hydroxyphenyl)methane, 2,2-bis(4-hydroxyphenyl)propane [bisphenol A], dihydroxydiphenyl, p,p'-dihydroxydiphenylsulfone, dihydroxynaphthalene, bis(4-hydroxyphenyl)sulfide, bis(4-hydroxyphenyl)sulfone, bis(4-hydroxyphenyl)ketone, bis(4-hydroxyphenyl)ether, and the like.

In the above formula, n represents the degree of condensation of the phosphoric ester. The oligomeric phosphoric ester is usually a mixture of phosphoric esters different in the degree of condensation from each other, and it is often exhibited by the average value of the degree of the condensation. The average value of n is usually not more than 5, preferably 0.5 to 3, and more preferably 0.7 to 2.

The oligomeric aromatic phosphoric ester includes a bisphosphate, a polyphosphate oligomer, etc., for example, an ester having a resorcinol backbone such as resorcinol bis(diphenyl phosphate), resorcinol bis(dicresyl phosphate), resorcinol bis(dixylenyl phosphate) and resorcinol bis(di-2,6-dimethylphenyl phosphate); an ester having a hydroquinone backbone such as hydroquinone bis(diphenyl phosphate), hydroquinone bis(dicresyl phosphate), hydroquinone bis(dixylenyl phosphate) and hydroquinone bis(di-2,6-dimethylphenyl phosphate); esters having a bisphenol A backbone such as bisphenol A bis(diphenyl phosphate), bisphenol A bis(dicresyl phosphate), bisphenol A bis(dixylenyl phosphate) and bisphenol A bis(di-2,6-dimethylphenyl phosphate); and the like.

The amount of the flame retardant (D) is, relative to 100 parts by weight of the total amount of the component (A) and the component (B), 3 to 30 parts by weight, and preferably 5 to 20 parts by weight.

The use of the flame retardant (in particular, the phosphoric ester such as the oligomeric aromatic phosphoric ester) enables to reduce ignition caused by an electric discharge. For example, the tracking resistance measured in accordance with IEC 112, the 3rd edition shows not less than 350V, preferably not less than 400V and more preferably not less than 450V. The arc resistance measured in accordance with ASTM D495 shows not less than 10 seconds and preferably not less than 12 seconds.

### [Other additives]

The styrenic resin composition of the present invention may optionally comprise other thermoplastic resin(s) (an acrylic resin, an olefinic resin, a vinyl-series resin, a polyamide-series resin, a polyester-series resin, a polyacetal-series resin, a thermoplastic polyurethane-series resin, a polyether-series resin, a polyketone-series resin, and the like), a flame-retardant auxiliary, a drip inhibitor [such as a fluorine-series (fluorine-containing) resin], a filler (a glass fiber, a carbon fiber, a metal filler, etc.), a flowability-improving agent, a stabilizer (an antioxidant, an ultraviolet ray absorbing agent, a light stabilizer, a thermostabilizer, etc.), a reinforcer, an antistatic agent, a lubricant, a releasing agent, an impact modifier, a stiffener, a color stabilizer (color-improving agent), a coloring agent, a plasticizer, a compatibilizing agent, a dispersing agent, a foaming agent, an antibacterial agent, and others. The additive(s) can be singly or in combination.

### [Production process]

The styrenic resin composition of the present invention may be prepared by mixing each component in each given amount with use of a conventional mixer, such as a Henschel mixer, a tumbler mixer and a kneader, under dry condition or wet (humid) condition. The resin composition is usually prepared by pre-mixing the components with use of the above-mentioned mixer(s), and then kneading the composition with use of an extruder or melt-kneading the composition with use of a kneader such as a heating roll or a Banbury mixer. The melt-kneading can be carried out under a suitable condition depending on each component, for example, at 150 to 250°C. The melt-kneaded composition may be once prepared in the form of a pellet by a monoaxial or biaxial extruder.

Thus obtained styrenic resin composition can be molded or formed into various shaped (or molded) articles by such a method as injection molding, extrusion molding, vacuum molding, profile extrusion, foam molding, injection pressing, press molding, blow molding, gas injection molding, and the like. Moreover, the styrenic resin composition of the present invention is excellent in releasability from a mold (or molding tool) and is moldable in a wide range. Therefore, the styrenic resin composition can be molded stably and efficiently with shortening (or abbreviating) the molding cycle.

The styrenic resin composition of the present invention is useful to mold or form a variety of shaped (or molded) articles. The styrenic resin composition can be applied in a wide range of application, for example, in each of a parts, a housing, a chassis and others used in OA (office automation) and electrical household appliances fields, electric and electronic fields, communication equipment fields, sanitary fields, automobile fields, fields associated with housing industry such as furnishing or furniture and building material, miscellaneous goods fields, etc. In particular, the composition is useful for a shaped article (or molded article) which requires tracking resistance, arc resistance and the like. For example, among the above-mentioned application, it is useful for a part of OA [particularly, forming (or molding) material for a toner cartridge container used for a copying machine applying an electrophotographic system].

### INDUSTRIAL APPLICABILITY

According to the present invention, a combination of a styrenic resin, a polyphenylene ether-series resin and a polyolefinic wax ensures impartment of excellent releasability and formability to a styrenic resin composition. Moreover, the styrenic resin composition further comprising a flame retardant has high flame-retardancy. In particular, the styrenic resin composition comprising a phosphoric ester can reduce ignition caused by an electric discharge.

### EXAMPLES

The following examples are intended to describe this invention in further detail and should by no means be interpreted as defining the scope of the invention. Incidentally, "part(s)" and "%" indicate the proportion by weight in the following examples.

### Examples 1 to 7 and Comparative Examples 1 to 4

Components described in Tables 1 and 2 were melt-kneaded at the proportion shown in Tables 1 and 2 at 230°C by using a biaxial extruder to pelletize. Thus obtained pellets were dried completely, and test pieces were made from the pellets by injection molding to evaluate their properties according to the following methods. The results are shown in Tables 1 and 2.

### [Izod impact strength (IS)]

Izod impact strength was measured in accordance with ASTM D 256.

### [Heat distortion temperature (HDT)]

The heat deflection temperature was measured in accordance with ASTM D 648 at loading of 18.6 kg/cm².

### [Releasability]

A mold for a test piece was used to evaluate releasability. In the molding conditions of the injection molding, a cylinder temperature of 210°C, a mold temperature of 60°C and an injection time of 15 seconds were constant, and an injection pressure and a cooling time were varied to evaluate the releasability.

### a) Injection pressure

The cooling time was fixed at 20 seconds, and the injection pressure was increased gradually from the condition of short shot state to the condition of poor mold releasing state. Here, a minimum injection pressure, in which injection becomes possible, and a maximum injection pressure, in which injection becomes impossible, are measured to determine a pressure range capable of injection. The wider the pressure range capable of injection is, the more excellent releasability is.

### b) Cooling time

A minimum injection pressure in which short shot was not generated refers to "injection pressure 1", and an injection pressure is set up as "injection pressure 2", in which a gauge pressure in injection pressure 2 is 5 kg/cm² higher than a gauge pressure in injection pressure 1, and a cooling time is decreased gradually in a range from 20 seconds to a time the composition becomes poor mold releasing state. Here, a cooling time when the composition becomes poor mold releasing state refers to "shortest cooling time". The shorter the shortest cooling time is, the more excellent releasability is.

### [Flammability]

A test piece being 1.3 mm thick was used to evaluate flammability according to UL-94.

### [Flammability by discharging]

A test piece being 1/8 inch thick was regulated for 48 hours under an atmosphere of 23 ± 2°C and 50 ± 5 RH to evaluate the flammability by discharging based on tracking resistance and arc resistance.

### a) Tracking resistance

Tracking resistance means a magnitude of a voltage to be generated tracking on a material in the case of adding 50 drops of 0.1 % by weight ammonium chloride solution to the material. The tracking resistance was measured in accordance with IEC 112, the 3rd edition.

### b) Arc resistance

Arc resistance means resistance (second) of a material relative to a forming of a conducting passage on the surface of the material in the case where intermittent arc according to high voltage-low current property is generated. The arc resistance was measured in accordance with ASTM D 495.

### [Components used in Examples and Comparative Examples]

(A) Styrenic resin
   HIPS: manufactured by Toyo Styrene Co., Ltd., H53C
   ·GPPS: manufactured by Toyo Styrene Co., Ltd., #10
(B) Polyphenylene ether-series resin
   ·Poly(2,6-dimethyl-1,4-phenylene)ether (PPE): manufactured by Mitsubishi Engineering-Plastics Corp., YPX100F, Mw 48,000
(C) polyolefinic wax
   ·Polyethylene wax: manufactured by Allied Signal Inc., A-C9A; melt viscosity at 140°C, 450cps; density, 0.93 g/ml
(D) Flame retardant
   ·Phosphorus-series flame retardant 1 [1,3-phenylenebis(di-2,6-dimethylphenylphosphate)]: manufactured by Daihachi Chemical Industry Co., Ltd., PX-200
   ·Phosphorus-series flame retardant 2 [1,3-phenylenebis(diphenylphosphate)]: manufactured by Daihachi Chemical Industry Co., Ltd., CR-733S
   ·Halogen-series flame retardant: manufactured by Albemarle Corp., SAYTEX 8010

### Other additives

·Ester of montanic acid: manufactured by Clariant Japan K. K., ET132.
·Ester of stearic acid 1: manufactured by NOF Corp. , H-476
·Ester of stearic acid 2: manufactured by NOF Corp., H-476D

**Table 1**

| | Com. EX.1 | EX.1 | EX.2 | EX.3 | Com. EX.2 | Com. EX.3 | Com. EX.4 |
|---|---|---|---|---|---|---|---|
| HIPS (parts) | 80 | 80 | 80 | 80 | 80 | 80 | 80 |
| GPPS (parts) | 20 | 20 | 20 | 20 | 20 | 20 | 20 |
| PPE (parts) | 12 | 12 | 12 | 12 | 12 | 12 | 12 |
| Polyethylene wax (parts) | - | 0.5 | 1 | 0.5 | - | - | - |
| Ester of montanic acid (parts) | - | - | - | - | 0.5 | - | - |
| Ester of stearic acid 1 (parts) | - | - | - | - | - | 0.5 | - |
| Ester of stearic acid 2 (parts) | - | - | - | - | - | - | 0.5 |
| Phosphorus-series flame retardant 1 (parts) | 12 | 12 | 12 | - | 12 | 12 | 12 |
| Phosphorus-series flame retardant 2 (parts) | - | - | - | 11 | - | - | - |
| (General properties) | | | | | | | |
| IS(kg/cm²) | 6.3 | 6.5 | 6.2 | 6.4 | 6.2 | 6.1 | 6.2 |
| HDT(°C) | 77 | 77 | 77 | 77 | 77 | 77 | 76 |
| (Releasability) | | | | | | | |
| Minimum injection pressure (%) | 26 | 26 | 26 | 26 | 26 | 26 | 26 |
| Maximum Injection pressure (%) | 30 | 33 | 34 | 33 | 30 | 30 | 30 |
| Range capable of injection (%) | 4 | 7 | 8 | 7 | 4 | 4 | 4 |
| Shortest cooling time (sec.) | 20 | 17 | 16 | 17 | 20 | 20 | 20 |
| (Flammability) UL-94 | V-2 | V-2 | V-2 | V-2 | V-2 | V-2 | V-2 |

As apparent from the result of Table 1, when an ester of a fatty acid instead of a polyethylene wax is used, the releasability of a styrenic resin composition is not improved.

**Table 2**

| | Ex.4 | Ex.5 | Ex.6 | Ex.7 |
|---|---|---|---|---|
| HIPS (parts) | 80 | 80 | 80 | 80 |
| GPPS (parts) | 20 | 20 | 20 | 20 |
| PPE (parts) | 12 | 25 | 12 | 12 |
| Polyethylene wax (parts) | 0.5 | 0.5 | 0.5 | 0.5 |
| Phosphorus-series flame retardant 1 (parts) | 12 | 12 | - | - |
| Phosphorus-series flame retardant 2 (parts) | - | - | 11 | - |
| Halogen-series flame retardant (parts) | - | - | - | 12 |
| (General properties) | | | | |
| IS(kg/cm²) | 6.5 | 7.5 | 6.4 | 7.5 |
| HDT(°C) | 77 | 85 | 77 | 79 |
| (Flammability) UL-94 | V-2 | V-2 | V-2 | V-2 |
| (Flammability by discharging) | | | | |
| Tracking resistance (V) | 475 | 350 | 460 | 325 |
| Arc resistance (sec.) | 12 | 10 | 12 | 12 |

As apparent from the result of Table 2, excellent flammability of discharging can be imparted to a styrenic resin composition by blending a small amount of a GPPS to a HIPS and blending a polyphenylene ether within a limit of small amount, and moreover by further using the oligomeric aromatic phosphoric ester.

## Claims

1. A styrenic resin composition comprising a styrenic resin (A), a polyphenylene ether-series resin (B), a polyolefinic wax (C) and a flame retardant (D), wherein the styrenic resin (A) comprises at least a rubber-modified styrenic resin, the polyolefinic wax (C) comprises a polyethylene wax, and the amount of the component (C) and that of the component (D) are 0.1 to 2 parts by weight and 3 to 30 parts by weight, respectively, relative to 100 parts by weight of the total amount of the component (A) and the component (B).

2. A styrenic resin composition according to claim 1, wherein the flame retardant (D) comprises a phosphorus-series flame retardant.

3. A styrenic resin composition according to claim 1, wherein the flame retardant (D) comprises an oligomeric aromatic phosphoric ester.

4. A styrenic resin composition according to claim 1, wherein the tracking resistance measured in accordance with IEC 112, the 3rd edition is not less than 350V, and the arc resistance measured in accordance with ASTM D495 is not less than 10 seconds.

5. A styrenic resin composition according to claim 1, wherein the melt viscosity at 140°C of the polyolefinic wax (C) is 200 to 600 cps.

6. A styrenic resin composition according to claim 1, wherein the density of the polyolefinic wax (C) is 0.86 to 0.98 g/ml.

7. A styrenic resin composition according to claim 1, wherein the melting point of the polyolefinic wax (C) is 100 to 140°C.

8. A styrenic resin composition according to claim 1, wherein the ratio of the component (A) relative to the component (B) is 70/30 to 95/5 (weight ratio).

9. A styrenic resin composition according to claim 1, wherein the ratio of the component (A) relative to the component (B) is 75/25 to 95/5 (weight ratio).

10. A flame-retardant styrenic resin composition, which comprises:
a styrenic resin composition (A) comprising a rubber-modified styrenic resin and a polystyrenic resin in a ratio of the former relative to the latter of 99/1 to 50/50 (weight ratio),
a polyphenylene ether-series resin (B) having a repeating unit represented by the following formula(s) (I) and/or (II): 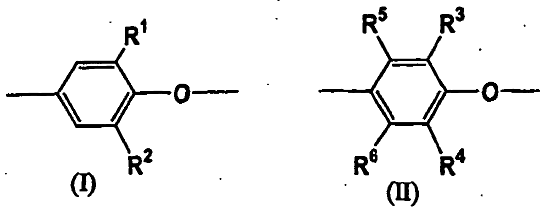
wherein R¹, R², R³, R⁴, R⁵ and R⁶ independently represent a C₁₋₄alkyl group, including a methyl, an ethyl, a propyl, a butyl and a t-butyl group, which may have a substituent including a hydroxyl group, an aryl group, including a phenyl group, which may have a substituent including a hydroxyl group, or a hydrogen atom, provided that R⁵ and R⁶ are not hydrogen atoms concurrently,
a polyethylene wax (C) having a density of 0.86 to 0.98 g/ml, a melt viscosity at 140°C of 300 to 550 cps and a melting point of 100 to 130°C, and
an oligomeric aromatic phosphoric ester (D) represented by the following formula (III), 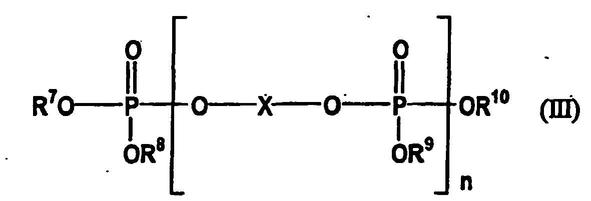
wherein R⁷, R⁸, R⁹ and R¹⁰ independently represent an aryl group which may have a substituent, X represents a di- or more valent aromatic group, and n is an integer of 0 or more, and
wherein the amount of the component (C) is 0.1 to 1 part by weight and the amount of the component (D) is 3 to 30 parts by weight relative to 100 parts by weight of a resin composition composed of the component (A) and the component (B), and the ratio of the component (A) relative to the component (B) is 80/20 to 95/5 (weight ratio).

11. A shaped article formed with a styrenic resin composition recited in claim 1.

12. A toner cartridge container formed with a styrenic resin composition recited in claim 1.

## Patentansprüche

1. Styrolharz-Zusammensetzung, die ein Styrolharz (A), ein Harz der Polyphenylenether-Reihe (B), ein Polyolefinwachs (C) und ein Flammschutzmittel (D) umfasst, wobei das Styrolharz (A) mindestens ein Kautschuk-modifiziertes Styrolharz umfasst, das Polyolefinwachs (C) ein Polyethylenwachs umfasst und die Menge der Komponente (C) und die Menge der Komponente (D) 0,1 bis 2 Gew.-Teile bzw. 3 bis 30 Gew.-Teile, bezogen auf 100 Gew.-Teile der Gesamtmenge von Komponente (A) und Komponente (B), betragen.

2. Styrolharz-Zusammensetzung nach Anspruch 1, in der das Flammschutzmittel (D) ein flammenhemmendes Agens der Phosphor-Reihe umfasst.

3. Styrolharz-Zusammensetzung nach Anspruch 1, in der das Flammschutzmittel (D) einen oligomeren aromatischen Phosphorsäureester umfasst.

4. Styrolharz-Zusammensetzung nach Anspruch 1, in der die Kriechstromfestigkeit, gemessen nach IEC 112, dritte Auflage, nicht weniger als 350V beträgt und die Lichtbogendurchschlagsfestigkeit, bestimmt nach ASTM D495, nicht weniger als 10 s beträgt.

5. Styrolharz-Zusammensetzung nach Anspruch 1, in der die Schmelzviskosität des Polyolefinwachses (C) bei 140 °C 200 bis 600 cP beträgt.

6. Styrolharz-Zusammensetzung nach Anspruch 1, in der die Dichte des Polyolefinwachses (C) 0,86 bis 0,98 g/ml beträgt.

7. Styrolharz-Zusammensetzung nach Anspruch 1, in der der Schmelzpunkt des Polyolefinwachses (C) 100 bis 140 °C beträgt.

8. Styrolharz-Zusammensetzung nach Anspruch 1, in der das Verhältnis zwischen der Komponente (A) und der Komponente (B), bezogen auf das Gewicht, 70/30 bis 95/5 beträgt.

9. Styrolharz-Zusammensetzung nach Anspruch 1, in der das Verhältnis zwischen der Komponente (A) und der Komponente (B), bezogen auf das Gewicht, 75/25 bis 95/5 beträgt.

10. Flammenhemmende Styrolharz-Zusammensetzung, die umfasst eine Styrolharz-Zusammensetzung (A), umfassend ein Kautschuk-modifiziertes Styrolharz und ein Polystyrolharz in einem Verhältnis von ersterem zu letzterem, bezogen auf das Gewicht, von 99/1 bis 50/50,
ein Harz der Polyphenylenether-Reihe (B), das eine wiederkehrende Einheit der nachfolgend angegebenen Formel (I) und/oder (II) aufweist: 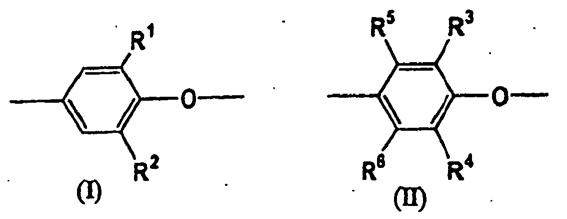
worin R¹, R², R³, R⁴, R⁵ und R⁶ unabhängig voneinander stehen für eine C₁₋₄₋Alkylgruppe einschließlich einer Methyl-, Ethyl-, Propyi-, Butyl- und t-Butylgruppe, die einen Substituenten einschließlich einer Hydroxylgruppe aufweisen kann, eine Arylgruppe einschließlich einer Phenylgruppe, die einen Substituenten einschließlich einer Hydroxylgruppe aufweisen kann, oder ein Wasserstoffatom, mit der Maßgabe, dass R⁵ und R⁶ nicht gleichzeitig Wasserstoffatome darstellen,
ein Polyethylenwachs (C) mit einer Dichte von 0,86 bis 0,98 g/ml, einer Schmelzviskosität bei 140 °C von 300 bis 550 cP und einem Schmelzpunkt von 100 bis 130 °C und
einen oligomeren aromatischen Phosphorsäureester (D), dargestellt durch die folgende Formel (III) 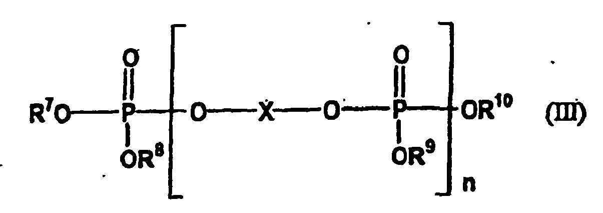
worin R⁷, R⁸, R⁹ und R¹⁰ unabhängig voneinander stehen für eine Arylgruppe, die einen Substituenten aufweisen kann, X steht für eine zweiwertige oder höherwertige aromatische Gruppe und n steht für eine ganze Zahl von 0 oder mehr, und
wobei die Menge der Komponente (C) 0,1 bis 1 Gew.-Teile und die Menge der Komponente (D) 3 bis 30 Gew.-Teile, bezogen auf 100 Gew.-Teile einer Harzzusammensetzung, die aus der Komponente (A) und der Komponente (B) besteht, betragen und das Verhältnis zwischen der Komponente (A) und der Komponente (B), bezogen auf das Gewicht, 80/20 bis 95/5 beträgt.

11. Formkörper, der mit einer Styrolharz-Zusammensetzung nach Anspruch 1 hergestellt ist.

12. Tonerpatronenbehälter, der aus einer Styrolharz-Zusammensetzung nach Anspruch 1 hergestellt ist.

## Revendications

1. Composition à base de résine styrénique, comprenant une résine styrénique (A), une résine de type polyéther de phénylène (B), une cire polyoléfinique (C) et un retardateur d'inflammation (D), dans laquelle la résine styrénique (A) comprend au moins une résine styrénique modifiée par caoutchouc, la cire polyoléfinique (C) comprend une cire de polyéthylène, et la quantité du composé (C) et celle du composé (D) sont respectivement de 0,1 à 2 parties en poids et de 3 à 30 parties en poids pour 100 parties en poids de la quantité totale du composant (A) et du composant (B).

2. Composition à base de résine styrénique selon la revendication 1, dans laquelle le retardateur d'inflammation (D) comprend un retardateur d'inflammation de type phosphoré.

3. Composition à base de résine styrénique selon la revendication 1, dans laquelle le retardateur d'inflammation (D) comprend un ester phosphorique aromatique oligomère.

4. Composition à base de résine styrénique selon la revendication 1, dans laquelle la résistance aux courants de fuite mesurée selon la troisième édition de la norme IEC 112, n'est pas inférieure à 350 V, et la résistance à l'arc mesurée selon la norme ASTM D495 n'est pas inférieure à 10 secondes.

5. Composition à base de résine styrénique selon la revendication 1, dans laquelle la viscosité à l'état fondu à 140 °C de la cire polyoléfinique (C) est de 200 à 600 cP.

6. Composition à base de résine styrénique selon la revendication 1, dans laquelle la masse volumique de la cire polyoléfinique (C) est de 0,86 à 0,98 g/ml.

7. Composition à base de résine styrénique selon la revendication 1, dans laquelle le point de fusion de la cire polyoléfinique (C) est de 100 à 140 °C.

8. Composition à base de résine styrénique selon la revendication 1, dans laquelle le rapport du composant (A) au composant (B) est de 70/30 à 95/5 (rapport pondéral).

9. Composition à base de résine styrénique selon la revendication 1, dans laquelle le rapport du composant (A) au composant (B) est de 75/25 à 95/5 (rapport pondéral).

10. Composition à base de résine styrénique retardateur d'inflammation, comprenant :
une composition à base de résine styrénique (A) comprenant une résine styrénique modifiée par caoutchouc et une résine polystyrénique selon un rapport de la première à la dernière de 99/1 à 50/50 (rapport pondéral),
une résine de type polyéther de phénylène (B) comportant un motif répété représenté par les formules (I) et/ou (II) suivantes : 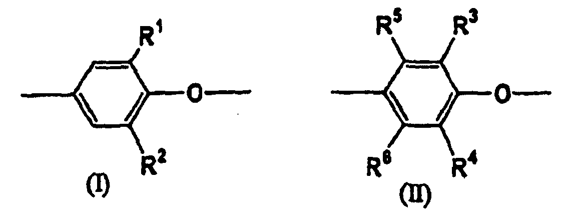
dans lesquelles R¹, R², R³, R⁴, R⁵ et R⁶ représentent indépendamment un groupe alkyle en C₁-C₄ comprenant les groupes méthyle, éthyle, propyle, butyle et t-butyle, qui peut comporter un substituant tel qu' un groupe hydroxy, un groupe aryle tel qu'un groupe phényle qui peut comporter un substituant tel qu'un groupe hydroxy, ou un atome d'hydrogène, à condition que R⁵ et R⁶ ne soient pas simultanément des atomes d'hydrogène,
une cire de polyéthylène (C) ayant une masse volumique de 0,86 à 0,98 g/ml, une viscosité à l'état fondu à 140 °C de 300 à 550 cP et un point de fusion de 100 à 130 °C, et
un ester phosphorique aromatique oligomère (D) représenté par la formule (III) suivante : 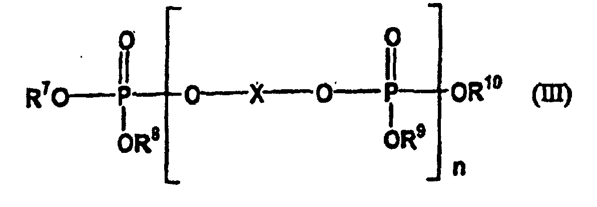
dans laquelle R⁷, R⁸, R⁹ et R¹⁰ représentent indépendamment un groupe aryle qui peut comporter un substituant, X représente un groupe aromatique à valence double ou supérieure, et n est un entier égal à 0 ou plus, et
dans laquelle la quantité du composant (C) est de 0,1 à 1 partie en poids et la quantité du composant (D) est de 3 à 30 parties en poids pour 100 parties en poids d'une composition de résine composée du composant (A) et du composant (B), et le rapport du composant (A) au composant (B) est de 80/20 à 95/5 (rapport pondéral).

11. Article façonné formé à partir d'une composition à base de résine styrénique définie dans la revendication 1.

12. Récipient pour cartouche à toner formé avec une composition à base de résine styrénique définie dans la revendication 1.
